Europäisches Patentamt

European Patent Office

Office européen des brevets

(11) Veröffentlichungsnummer: **0 307 738 B1**

(12) **EUROPÄISCHE PATENTSCHRIFT**

(51) Int. Cl.⁵: **F16K 11/00, G05D 23/13**

(45) Veröffentlichungstag der Patentschrift:
09.05.90

(21) Anmeldenummer: **88114395.2**

(22) Anmeldetag: **03.09.88**

(54) **Mischbatterie.**

(30) Priorität: **10.09.87 DE 3730375**

(43) Veröffentlichungstag der Anmeldung:
**22.03.89 Patentblatt 89/12**

(45) Bekanntmachung des Hinweises auf die Patenterteilung:
**09.05.90 Patentblatt 90/19**

(84) Benannte Vertragsstaaten:
**AT BE CH DE ES FR GB GR IT LI NL SE**

(56) Entgegenhaltungen:
**DE-A- 2 014 552**
**DE-A- 3 541 985**
**DE-A- 3 541 986**
**DE-B- 2 821 092**

(73) Patentinhaber: **IDEAL-STANDARD GMBH, Euskirchener Strasse 80, D-5300 Bonn 1(DE)**

(72) Erfinder: **Ems, Josef, Moselweinstrasse 35, D-5561 Minheim(DE)**

(74) Vertreter: **Gesthuysen, Hans Dieter, Dipl.-Ing. et al, Patentanwälte Gesthuysen + von Rohr Huyssenallee 15 Postfach 10 13 33, D-4300 Essen 1(DE)**

ACTORUM AG

**Beschreibung**

Die Erfindung betrifft eine Mischbatterie, insbesondere eine Thermostat-Mischbatterie, nach dem Oberbegriff von Anspruch 1.

Mischbatterien der in Rede stehenden Art, also insbesondere Thermostat-Mischbatterien, sind in verschiedenen Ausführungsformen bekannt. Bei diesen Mischbatterien muß dem Kaltwasserteil der Mischkammer vom Kaltwasseranschluß her Kaltwasser und dem Warmwasserteil der Mischkammer vom Warmwasseranschluß her Warmwasser zugeleitet werden. Bei seitenverkehrter Installation einer solchen Mischbatterie, also Installation mit Anschluß des Kaltwasseranschlusses an die Warmwasserleitung und des Warmwasseranschlusses an die Kaltwasserleitung arbeitet eine solche Mischbatterie ohne besondere Maßnahmen mit verkehrter Betätigungsrichtung bzw. bei der Ausgestaltung als Thermostat-Mischbatterie überhaupt nicht.

Da häufig durch Fehler der Installationshandwerker oder durch bauliche Gegebenheiten eine seitenverkehrte Installation erfolgt, wird bei modernen Mischbatterien dafür gesorgt, daß die Zuordnung von Kaltwasseranschluß zu Kaltwasserteil und von Warmwasseranschluß zu Warmwasserteil vertauschbar ist. Bei einer bekannten Mischbatterie (DE-A 3 541 985) wird diese Vertauschbarkeit der Zuordnungen dadurch realisiert, daß ein Oberteil mit der Mischeinrichtung in zwei verschiedenen Drehstellungen mit einem Grundteil mit Kaltwasseranschluß und Warmwasseranschluß verbindbar ist. Lediglich durch Drehen der Gehäuseteile lassen sich bei seitenverkehrter Installation die funktionsgerechten Zulaufverhältnisse wieder herstellen. Bei einer weiteren bekannten Mischbatterie (DE-A 3 541 986) wird das gleiche Ergebnis dadurch erreicht, daß Kaltwasser und Warmwasser über einen zentralen Befestigungsschaft geführt sind, in dem in einer Aufnahme ein Zwischenstück angeordnet ist, wobei dieses Zwischenstück wahlweise gekreuzt oder parallel laufende Strömungsverbindungswege für Kaltwasser und Warmwasser aufweisen kann. Durch Austausch des Zwischenstücks lassen sich bei seitenverkehrter Installation hier die funktionsgerechten Zulaufverhältnizze wieder herstellen.

Das zuvor an erster Stelle erläuterte Drehsystem für eine Mischbatterie ist zwar sehr komfortabel, stellt aber eine relativ teure Konstruktion dar. Das zuvor an zweiter Stelle erläuterte Stecksystem einer Mischbatterie ist zwar preisgünstiger, hat aber den Nachteil, daß entweder der Mischbatterie stets ein zusätzliches, aber im Regelfall nicht gebrauchtes Zwischenstück beigefügt werden muß oder daß der Installateur ein Ersatz-Zwischenstück für seitenverkehrte Installation mitführen muß, - was nach aller Erfahrung in den meisten Fällen dann doch nicht geschieht.

Der Erfindung liegt nun die Aufgabe zugrunde, eine Mischbatterie anzugeben, bei der die funktionsgerechte Anpassung der Zulaufverhältnisse an die tatsächlich gegebenen Anschlußverhältnisse unter allen Umständen besonders einfach und mit einer sehr preisgünstigen Konstruktion erfolgen kann.

Die zuvor aufgezeigte Aufgabe ist bei einer Mischbatterie mit den Merkmalen des Oberbegriffs von Anspruch 1 durch die Merkmale des kennzeichnenden Teils von Anspruch 1 gelöst. Erfindungsgemäß weisen Kaltwasserteil und Warmwasserteil der Mischkammer nicht, wie im Stand der Technik, jeweils nur genau einen Strömungsverbindungsweg auf, der dann mit aufwendigen Maßnahmen entweder auf den Kaltwasseranschluß oder den Warmwasseranschluß "geschaltet" werden muß, sondern sind jeweils gleich zwei Strömungsverbindungswege vorgesehen, von denen sich einer jeweils zum Kaltwasseranschluß und der andere jeweils zum Warmwasseranschluß erstreckt. Durch einfaches Öffnen bzw. Schliessen zueinander komplementärer Strömungsverbindungswege läßt sich so eine "Umschaltung" der Zulaufverhältnisse bei seitenverkehrter Installation erreichen. Gleichzeitig ist sichergestellt, daß alle benötigten Teile im Gehäuse der Mischbatterie selbst vorhanden sind, also nicht etwa ein Austausch gegen andere, zusätzlich mitgeführte Teile erfolgen muß.

Es gibt nun eine Vielzahl von Möglichkeiten, die Lehre der Erfindung auszugestalten und weiterzubilden, wozu einerseits auf die dem Anspruch 1 nachgeordneten Ansprüche verwiesen werden darf, andererseits Bezug genommen wird auf die nachfolgende Erläuterung eines bevorzugten Ausführungsbeispiels der Erfindung anhand der Zeichnung. In der Zeichnung zeigt

Fig. 1 im Schnitt ein bevorzugtes Ausführungsbeispiel einer erfindungsgemäßen Mischbatterie und

Fig. 2 und 3 im Schnitt jeweils einen Strömungsleiteinsatz für eine Mischbatterie gemäß Fig. 1.

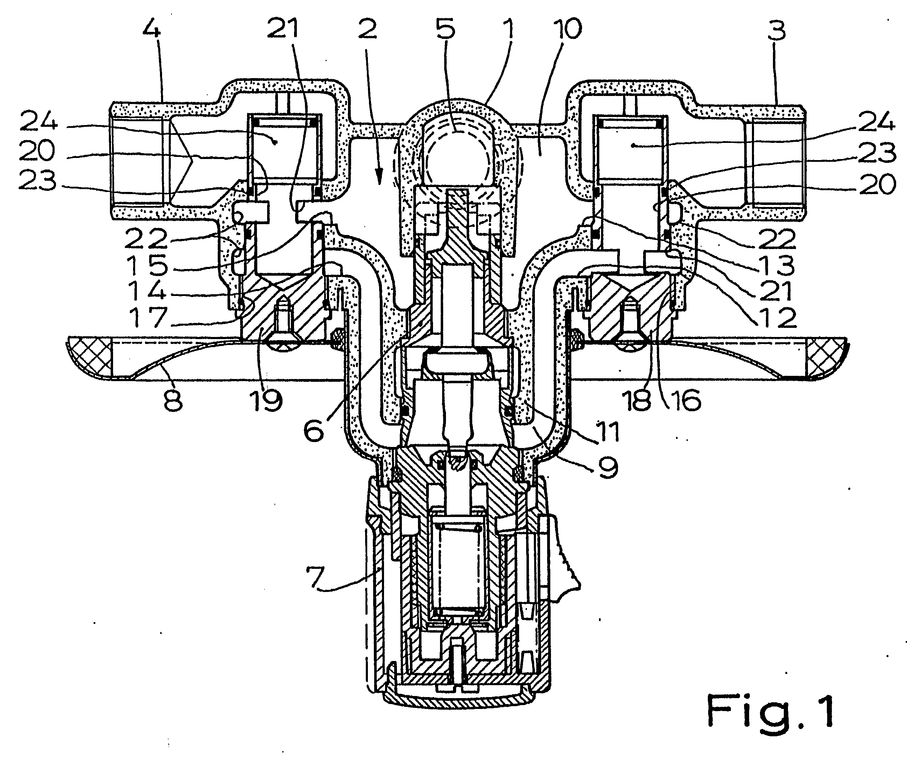

Fig. 1 zeigt eine als solche bekannte Mischbatterie, die hier und nach bevorzugter Lehre als Thermostat-Mischbatterie ausgeführt ist. In einem Gehäuse 1 findet sich zunächst eine Mischkammer 2. Am Gehäuse 1 ist ein Kaltwasseranschluß 3, ein Warmwasseranschluß 4 und ein Mischwasserabgang 5 gestrichelte Linien) angeordnet. Im hier dargestellten Ausführungsbeispiel einer Thermostat-Mischbatterie befindet sich in der Mischkammer 2 auch noch eine Thermostat-Mischeinrichtung 6. Die Thermostat-Mischeinrichtung 6 wird von einem Temperatureinstellknauf 7 her eingestellt. Die hier dargestellte Mischbatterie ist für Anbringung unter Putz bestimmt und geeignet, es ragt also nur der in Fig. 1 in der Mitte erkennbare Bereich des Gehäuses 1 mit dem Temperatureinstellknauf 7 von einer Wand ab. Die in der Wand eines Gebäudes vorgesehene Ausnehmung wird durch eine aufgeschraubte Abdeckrosette 8 optisch abgedeckt und gegen Spritzwasser geschützt.

Wie Fig. 1 zeigt, weist die Mischkammer 2 einen Kaltwasserteil 9 und einen Warmwasserteil 10 auf, die voneinander durch eine Trennwand 11 getrennt sind. Die Mischung von Kaltwasser aus dem Kaltwasserteil 9 mit Warmwasser aus dem Warmwasserteil 10 erfolgt durch Wasserströmung in der Thermostat-Mischeinrichtung 6 je nach Einstellung des Temperatureinstellknaufes 7. Wesentlich ist, daß die Zuordnung von Kaltwasseranschluß 3 zu Kaltwasserteil 9 und Warmwasseranschluß 4 zu Warmwasserteil 10 vertauschbar ist, so daß die funktionswichtigen Zulaufverhältnisse auch bei seitenverkehrter Installation, also Anschluß der Warmwasserleitung an den Kaltwasseranschluß 3 und der Kaltwasserleitung an den Warmwasseranschluß 4, ohne weiteres wieder hergestellt werden können.

Um die zuvor erläuterte Funktion zu realisieren, ist die hier dargestellte Mischbatterie so konstruiert, daß einerseits vom Kaltwasseranschluß 3, andererseits vom Warmwasseranschluß 4 je ein Strömungsverbindungsweg 12, 13 bzw. 14, 15 zum Kaltwasserteil 9 und zum Warmwasserteil 10 vorgesehen ist und daß bei funktiontüchtiger Mischbatterie stets beim Kaltwasseranschluß 3 nur einer der beiden Strömungsverbindungswege 12 bzw. 13 und beim Warmwasseranschluß 4 nur der andere, komplementäre Strömungsverbindungsweg 15 bzw. 14 geöffnet ist. Im hier dargestellten und insoweit bevorzugten Ausführungsbeispiel ist die Konstruktion des Gehäuses 1 so getroffen, daß die dem Kaltwasseranschluß 3 und dem Warmwasseranschluß 4 zugeordneten Strömungsverbindungswege 12, 13 bzw. 14, 15 symmetrisch zur Mischkammer 2 angeordnet sind.

Die wechselseitige Öffnung und Schließung der jeweils relevanten Strömungsverbindungswege 12, 14 bzw. 13, 15 kann auf ganz unterschiedliche Arten realisiert werden. Grundsätzlich ist es natürlich möglich, daß zur Öffnung und Absperrung der Strömungsverbindungswege im Gehäuse Ventile, Klappen od. dgl. vorgesehen sind. Die entsprechende Lagerung und Einstellung von Ventilen, Klappen od. dgl. ist aber konstruktiv und handhabungstechnisch relativ aufwendig bzw. kompliziert. Insoweit zeigt Fig. 1 eine besonders bevorzugte Lehre der Erfindung, die dadurch gekennzeichnet ist, daß den Strömungsverbindungswegen 12, 13 bzw. 14, 15 einerseits des Kaltwasseranschlusses 3, andererseits des Warmwasseranschlusses 4 jeweils ein gemeinsamer Aufnahmeraum 16 bzw. 17 im Gehäuse 1 zugeordnet ist, daß zur Öffnung bzw. Absperrung der Strömungsverbindungswege 12, 13 bzw. 14, 15 in die Aufnahmeräume 16, 17 Strömungsleiteinsätze 18, 19 auswechselbar eingesetzt sind und daß, vorzugsweise, die Strömungsleiteinsätze 18, 19 gegeneinander austauschbar sind. Durch Austausch der Strömungsleiteinsätze 18, 19 gegeneinander läßt sich die erforderliche Umstellung der Zulaufverhältnisse bei seitenverkehrter Installation mit zwei Griffen bewerkstelligen. Wichtig ist dabei, daß keine gesonderten, externen Teile vorhanden sein müssen, sondern durch diese Konstruktion die Mischbatterie vor dem Austausch der Strömungsleiteinsätze 18, 19 gerade so komplett ist wie nach dem Austausch.

Die Strömungsleiteinsätze 18, 19 sollten natürlich möglichst sicheren Sitz im Gehäuse 1 haben, gleichwohl aber leicht auswechselbar sein. Dazu empfiehlt es sich nun, daß die Aufnahmeräume 16, 17 als Steckfassungen oder Schraubfassungen und die Strömungsleiteinsätze 18, 19 als Steckeinsätze oder Schraubeinsätze ausgeführt sind. Im hier dargestellten Ausführungbeispiel handelt es sich um Steckfassungen und Steckeinsätze in den in Fig. 1 oberen Bereichen und um Schraubfassungen und Schraubeinsätze in den in Fig. 1 unten liegenden Bereichen.

Die Formgebung von Aufnahmeräumen und Strömungsleiteinsätzen ist im Grundsatz lediglich von Zweckmäßigkeitsgesichtspunkten bestimmt. Es hat sich herstellungstechnisch und damit kostenmäßig als besonders zweckmäßig erwiesen, daß die Aufnahmeräume 16, 17 und die Strömungsleiteinsätze 18, 19 zylindrisch ausgeführt sind, daß die Strömungsverbindungswege 12 bis 15 an den Mantelflächen der Aufnahmeräume 16, 17 münden und daß die Strömungsleiteinsätze 18, 19 jeweils einen axial verlaufenden, mit dem jeweiligen Wasseranschluß 3 bzw. 4 verbundenen Strömungskanal 20, eine in der Mantelfläche angeordnete, vom Strömungskanal 20 ausgehende und mit der Mündung des entsprechenden Strömungsverbindungswegs 12 bzw. 15 fluchtende Queröffnung 21 und einen von der Mantelfläche gebildeten, die Mündung des weiteren Strömungsverbindungswegs 13 bzw. 14 verschließenden Bereich aufweisen. Durch diese Konstruktion ist zwanglos eine Strömung von Wasser im Inneren des Strömungsleiteinsatzes 18, 19 gewährleistet. Ventiltechnische Erfahrungen lassen es als zweckmäßig erscheinen, daß die Strömungsverbindungswege 12 bis 15 axial bezüglich der Längsachsen der Aufnahmeräume 16, 17 mit Abstand voneinander münden, wie Fig. 1 ohne weiteres erkennen läßt. Dies Münden kann punktuell erfolgen, strömungstechnisch ist es aber besonders zweckmäßig, die Strömungsverbindungswege 12 bis 15 in den Aufnahmeräumen 16, 17 in Ringnuten 22 münden zu lassen. Damit wird ein erheblich größerer Strömungsquerschnitt verfügbar, jedenfalls dann, wenn die Queröffnungen 21 entsprechend als teilkreisförmige Schlitze ausgeführt sind, wie das die Fig. 1 bis 3 sämtlich zeigen.

Die zuvor erläuterte, bevorzugte Anordnung der Strömungsverbindungswege 12 bis 15 hat zur Folge, daß die erforderliche strömungstechnische Trennung der Mündungen voneinander einfach dadurch erreicht werden kann, daß die Strö mungsleiteinsätze 18, 19 mit umlaufenden Dichtungselementen 23 versehen sind. Bei den Dichtungselementen 23 handelt es sich normalerweise um O-Ringe, die in entsprechenden Ringnuten an den Strömungsleiteinsätzen 18, 19 angeordnet sind. Durch einfaches Umstecken bzw. Einschrauben der Strömungsleiteinsätze 18, 19 werden die Strömungsverbindungswege 12 bis 15 in unterschiedlicher Weise geöffnet bzw. abgesperrt, so daß stets sichergestellt ist, daß die funktionsgerechten Zulaufverhältnisse gewahrt sind. Die Konstruktion ist äußerst einfach und zweckmäßig und erlaubt eine "Umschaltung" unter allen Umständen, nämlich völlig unabhängig davon, ob ein Installateur ein Ersatzteil mitführt oder nicht.

Bei Thermostat-Mischbatterien ist zu unterscheiden zwischen Zentralthermostaten und Einzelthermostaten. Zentralthermostate haben nur Mischfunktion, also keine Absperrfunktion. Demgegenüber haben Einzelthermostate sowohl Mischfunktion als auch Absperrfunktion. Bei dem hier dargestellten Ausführungsbeispiel einer erfindungsgemäßen Mischbatterie handelt es sich im Sinne der zuvor gemachten Differenzierung um einen Zentralthermostaten.

Insbesondere bei Zentralthermostaten muß verhindert werden, daß Warmwasser in die Kaltwasserleitung gelangt. Dazu sind auch im Ausführungsbeispiel Rückschlagventile 24 vorgesehen. Wesentlich ist nun dabei, daß die Rückschlagventile 24 in die Strömungsleiteinsätze 18, 19, insbesondere die axial verlaufenden Strömungskanäle 20 der Strömungsleiteinsätze 18, 19, integriert sind. Man könnte auch umgekehrt ausdrücken, daß die an sich vorhandenen Rückschlagventile 24 zu Strömungsleiteinsätzen 18, 19 erweitert und ausgestaltet worden sind. Jedenfalls ist damit erreicht, daß das Gehäuse 1 der Mischbatterie nicht viel größer wird als bisher und ein ohnehin vorhandener Aufnaheraum 16 bzw. 17 auf jeder Seite des Gehäuses 1 in doppelter Funktion genutzt wird.

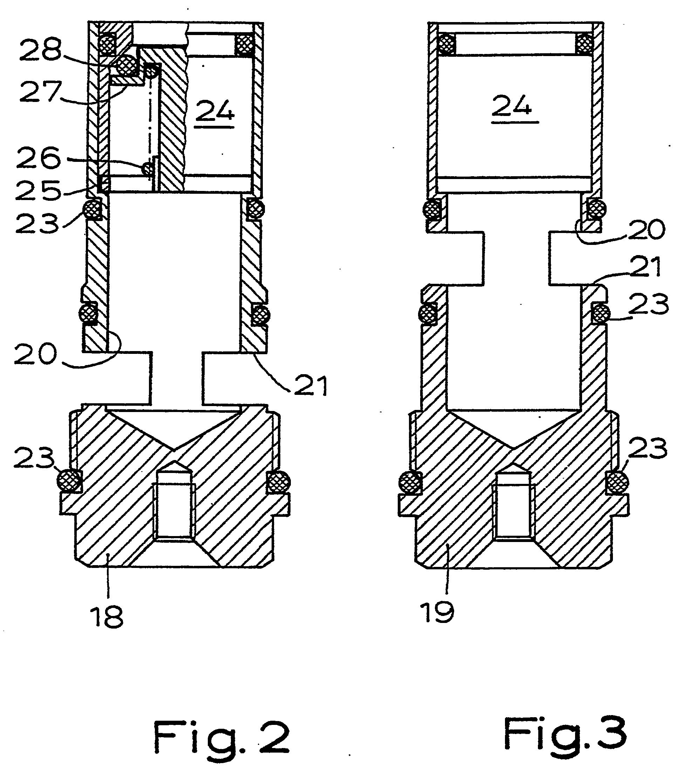

Die Fig. 2 und 3 zweigen in vergrößerter Darstellung und jeweils im Schnitt die Strömungsleiteinsätze 18 (Fig. 2) und 19 (Fig. 3) der Mischbatterie aus Fig. 1. Hier ist deutlicher als in Fig. 1 die Konstruktion des Rückschlag ventils 24 zu erkennen. Wie üblich weist das Rückschlagventil 24 ein sich an einem Widerlager 25 über eine Feder 26 abstützendes Schließelement 27 auf, das hier als Ventilteller mit einliegendem O-Ring ausgeführt ist. Gegenstück zum Schließelement 27 ist ein Ventilsitz 28. Der Ventilsitz 28 bildet mit dem Schließelement 27, der Feder 26 und dem Widerlager 25 einen Ventileinsatz, jedes Rückschlagventil 24 ist also insoweit als zylindrischer Ventileinsatz ausgeführt und in den jeweiligen Strömungskanal 20 eingesetzt. Fig. 2 zeigt dabei ebenso wie Fig. 3, daß am Ventileinsatz eine außen umlaufende Nut zur Aufnahme eines weiteren O-Rings angebracht ist, die den Ventileinsatz gegenüber dem Strömungsleiteinsatz 18 abdichtet, so daß am Rückschlagventil 24 vorbei keine Leckströmung erfolgen kann.

Die Fig. 2 und 3 zeigen im Zusammenhang sehr deutlich, daß sich die beiden Strömungsleiteinsätze 18, 19 nur in einem einzigen Punkt unterscheiden, nämlich in der axialen Anordnung der Queröffnung 21. Die beiden Strömungsleiteinsätze 18, 19 sind also perfekt gegeneinander austauschbar, wie das zuvor gefordert und erläutert worden ist.

## Patentansprüche

1. Mischbatterie, insbesondere Thermostat-Mischbatterie, mit einem Gehäuse (1) mit einer Mischkammer (2), einem Kaltwasseranschluß (3), einem Warmwasseranschluß (4), einem Mischwasserabgang (5) und, vorzugsweise, einer Thermostat-Mischeinrichtung (6), wobei die Mischkammer (2) einen Kaltwasserteil (9) und einen Warmwasserteil (10) aufweist und wobei die Zuordnung von Kaltwasseranschluß (3) zu Kaltwasserteil (9) und Warmwasseranschluß (4) zu Warmwasserteil (10) vertauschbar ist, dadurch gekennzeichnet, daß einerseits vom Kaltwasseranschluß (3), andererseits vom Warmwasseranschluß (4) je ein Strömungsverbindungsweg (12, 13 bzw. 14, 15) zum Kaltwasserteil (9) und zum Warmwasserteil (10) vorgesehen ist und daß bei funktionstüchtiger Mischbatterie stets beim Kaltwasseranschluß (3) nur einer der beiden Strömungsverbindungswege (12 bzw. 13) und beim Warmwasseranschluß (4) nur der andere, komplementäre Strömungsverbindungsweg (15 bzw. 14) geöffnet ist.

2. Mischbatterie nach Anspruch 1, dadurch gekennzeichnet, daß die dem Kaltwasseranschluß (3) und dem Warmwasseranschluß (4) zugeordneten Strömungsverbindungswege (12, 13 bzw. 14, 15) symmetrisch zur Mischkammer (2) angeordnet sind.

3. Mischbatterie nach Anspruch 1 oder 2, dadurch gekennzeichnet, daß zur Öffnung und Absperrung der Strömungsverbindungswege im Gehäuse Ventile, Klappen od. dgl. vorgesehen sind.

4. Mischbatterie nach Anspruch 1 oder 2, dadurch gekennzeichnet, daß den Strömungsverbindungswegen (12, 13 bzw. 14, 15) einerseits des Kaltwasseranschlusses (3), andererseits des Warmwasseranschlusses (4) jeweils eine gemeinsamer Aufnahmeraum (16 bzw. 17) im Gehäuse (1) zugeordnet ist, daß zur Öffnung bzw. Absperrung der Strömungsverbindungswege (12, 13 bzw. 14, 15) in die Aufnahmeräume (16, 17) Strömungsleiteinsätze (18, 19) auswechselbar eingesetzt sind und daß, vorzugsweise, die Strömungsleiteinsätze (18, 19) gegeneinander austauschbar sind.

5. Mischbatterie nach Anspruch 4, dadurch gekennzeichnet, daß die Aufnahmeräume (16, 17) als Steckfassungen oder Schraubfassungen und die Strömungsleiteinsätze (18, 19) als Steckeinsätze oder Schraubeinsätze ausgeführt sind.

6. Mischbatterie nach Anspruch 4 oder 5, dadurch gekennzeichnet, daß die Aufnahmeräume (16, 17) und die Strömungsleiteinsätze (18, 19) zylindrisch ausgeführt sind, daß die Strömungsverbindungswege (12 bis 15) an den Mantelflächen der Aufnahmeräume (16, 17) münden und daß die Strömungsleiteinsätze (18, 19) jeweils einen axial verlaufenden, mit dem jeweiligen Wasseranschluß (3 bzw. 4) verbundenen Strömungskanal (20), eine in der Mantelfläche angeordnete, vom Strömungskanal (20) ausgehende und mit der Mündung des entsprechenden Strömungsverbindungswegs (12 bzw. 15) fluchtende Queröffnung (21) und einen von der Mantelfläche gebildeten, die Mündung des weiteren Strömungsverbindungswegs (13 bzw. 14) verschließenden Bereich aufweisen.

7. Mischbatterie nach Anspruch 6, dadurch gekennzeichnet, daß die Strömungsverbindungswege (12 bis 15) axial bezüglich der Längsachsen der Aufnahmeräume (16, 17) mit Abstand voneinander münden.

8. Mischbatterie nach Anspruch 7, dadurch gekennzeichnet, daß die Strömungsverbindungswege (12 bis 15) in Ringnuten (22) in den Aufnahmeräumen (16, 17) münden.

9. Mischbatterie nach Anspruch 7 oder 8, dadurch gekennzeichnet, daß die Strömungsleiteinsätze (18, 19) mit umlaufenden Dichtungselementen (23) versehen sind.

10. Mischbatterie nach einem der Ansprüche 4 bis 9, dadurch gekennzeichnet, daß dem Kaltwasseranschluß (3) und dem Warmwasseranschluß (4), wie an sich bekannt, jeweils ein Rückschlagventil (24) zugeordnet ist und daß die Rückschlagventile (24) in die Strömungsleiteinsätze (18, 19), insbesondere die axial verlaufenden Strömungskanäle (20) der Strömungsleiteinsätze (18, 19), integriert sind.

11. Mischbatterie nach Anspruch 10, dadurch gekennzeichnet, daß die Rückschlagventile (24) als zylindrische Ventileinsätze ausgeführt und in die Strömungskanäle (20) eingesetzt sind.

## Revendications

1. Appareil mélangeur, notamment à thermostat, comportant un corps (1) qui contient une chambre de mélange (2) et qui est pourvu d'un raccord d'entrée (3) pour l'eau froide, d'un autre raccord d'entrée (4) pour l'eau chaude, et d'une sortie (5) pour l'eau mitigée, la chambre de mélange (2) de cet appareil étant associée de préférence à un système mélangeur à thermostat (6), et comportant une zone d'arrivée d'eau froide (9) et une zone d'arrivée d'eau chaude (10); des moyens étant prévus pour inverser au besoin la correspondance normale du raccord d'entrée de l'eau froide (3) avec la zone d'arrivée d'eau froide (9), et celle du raccord d'entrée de l'eau chaude (4) avec la zone d'arrivée d'eau chaude (10); caractérisé en ce qu'il existe dans le corps (1) de l'appareil, à partir dé chacun des raccords d'entrée de l'eau froide (3) et de l'eau chaude (4), deux passages de liaison possibles (12, 13, et 14, 15) aboutissant respectivement à la zone d'arrivée de l'eau froide (9) dans la chambre de mélange (2) et à la zone d'arrivée de l'eau chaude (10) dans cette même chambre; des moyens étant prévus pour qu'à la mise en service de l'appareil on n'utilise seulement que l'un des passages possibles (12 ou 13) prévus à partir du raccord d'entrée normal de l'eau froide (3), et seulement l'autre passage complémentaire possible (15 ou 14) prévu à partir du raccord d'entrée normal de l'eau chaude (4).

2. Appareil mélangeur selon la revendication 1, caractérisé en ce que les passages internes de liaison (12, 13 et 14, 15) qui sont associés au raccord d'entrée de l'eau froide (3) et au raccord d'entrée de l'eau chaude (4) sont disposés symétriquement par rapport à la chambre de mélange (2).

3. Appareil mélangeur selon la revendication 1 ou 2, caractérisé en ce qu'il comporte des organes d'obturation tels que des soupapes ou des clapets, disposés dans le corps de l'appareil, pour y assurer la libre ouverture ou la fermeture des passages de liaison internes.

4. Appareil mélangeur selon la revendication 1 ou 2, caractérisé en ce qu'il comporte deux logements (16, 17) ménagés dans le corps (1) de l'appareil et associés respectivement aux passages internes (12, 13) provenant du raccord d'entrée de l'eau froide (3) et aux passages internes (14, 15) provenant du raccord d'entrée de l'eau chaude (4); en ce que ces deux logements (16, 17) sont adaptés à recevoir des pières amovibles de raccordement (18, 19) permettant d'assurer la libre ouverture ou la fermeture des passages internes (12, 13 et 14, 15) ces deux pièces de raccordement (18, 19) étant de préférence interchangeables l'une avec l'autre.

5. Appareil mélangeur selon la revendication 4, caractérisé en ce que les logements (16, 17) sont prévus pour permettre d'y monter par emboîtement ou par vissage les pièces amovibles de raccordement (18, 19) qui sont réalisées en conséquence pour l'un ou l'autre de ces deux genres de montage.

6. Appareil mélangeur selon la revendication 4 ou 5, caractérisé en ce que les logements (16, 17) ont une forme sensiblement cylindrique, anisi que les pièces amovibles de raccordement (18, 19); en ce que les passages internes (12 à 15) ménagés dans le corps (1) de l'appareil débouchent sur la face interne de ces logements (16, 17); et en ce que chacune des pièces amovibles de raccordement (18, 19) comporte un canal axial d'écoulement (20) qui communique en position de service avec le raccord d'entrée correspondant de l'eau froide (3) ou de l'eau chaude (4), ce canal axial (20) ayant une ouverture de sortie (21) orientée transversalement et ménagée dans la paroi du corps de la pièce de raccordement (18, 19) pour venir exactement en coïncidence avec un orifice correspondant de l'un des passages de liaison associés (12, 15) la paroi du corps de la pièce de raccordement (18, 19) présentant par ailleurs une partie pleine en regard de l'orifice de l'autre passage de liaison associé (13, 14) pour assurer la fermeture de ce passage.

7. Appareil mélangeur selon la revendication 6, caractérisé en ce que les orifices des passages de liaison internes (12 à 15) sont disposés dans les logements (16, 17) avec un certain écartement d'un orifice à l'autre dans le sens axial de chaque logement.

8. Appareil mélangeur selon la revendication 7, caractérisé en ce que les passages internes de liaison (12 à 15) débouchent chacun dans une gorge annulaire (22) du logement correspondant (16, 17).

9. Appareil mélangeur selon la revendication 7 ou 8, caractérisé en ce que les pièces amovibles de raccordement (18, 19) sont pourvues de joints annulaires d'étanchéité (23) qui sont montés autour de ces pièces.

10. Appareil mélangeur selon l'une des revendications 4 à 9, caractérisé en ce qu'il comporte un clapet anti-retour (24), d'un type connu, associé à charun des raccords d'entrée de l'eau froide (3) et de l'eau chaude (4), ces clapets anti-retour (24) étant incorporés chacun dans l'une des pièces amovibles de raccordement (18, 19), et montés en particulier chacun dans le canal axial (20) de la pièce de raccordement correspondante (18, 19).

11. Appareil mélangeur selon la revendication 10, caractérisé en ce que chaque clapet anti-retour (24) comporte une monture constituant un corps cylindrique amovible adapté à être monté dans le canal axial (20) de chaque pièce de raccordement (18, 19).

## Claims

1. Mixing valve unit, in particular a thermostatic mixing valve unit, having a housing (1) with a mixing chamber (2), a cold water connection (3), a hot water connection (4), a mixed water outlet (5) and, preferably, a thermostatic-mixing device (6), wherein the mixing chamber (2) has a cold water portion (9) and a hot water portion (10) and wherein the allocation of cold water connection (3) to cold water portion (9) and hot water connection (4) to hot water portion (10) is interchangeable, characterised in that there is provided a flow connection path (12, 13 or 14, 15) to the cold water portion (9) and to the hot water portion (10) respectively, on the one hand from the cold water connection (3) and on the other hand from the hot water connection (4), and in that in all cases with an appropriately functioning mixing unit for the cold water connection (3) only one of the two flow connection paths (12 or 13) is open and for the hot water connection (4) only the other complementary flow connection path (15 or 14) is open.

2. Mixing valve unit according to claim 1, characterised in that the flow connection paths (12, 13 or 14, 15) associated with the cold water connection (3) and the hot water connection (4) are arranged symmetrically to the mixing chamber (2).

3. Mixing valve unit according to claim 1 or 2, characterised in that valves, shutters or the like are provided for opening and blocking the flow connection paths in the housing.

4. Mixing valve unit according to claim 1 or 2, characterised in that a common receiving chamber (16 or 17) in the housing (1) is respectively allocated to the flow connection paths (12, 13 or 14, 15) on the one hand of the cold water connection (3) and on the other hand of the hot water connection (4), in that flow guiding inserts (18, 19) are interchangeably inserted into the receiving chambers (16, 17) in order to open or block the flow connection paths (12, 13 or 14, 15) and in that, preferably, the flow guiding inserts (18, 19) can be mutually interchanged.

5. Mixing valve unit according to claim 4, characterised in that the receiving chambers (16, 17) are constructed as plug-in sockets or screw sockets and the flow guiding inserts (18, 19) as plug-in inserts or screw inserts.

6. Mixing valve unit according to claim 4 or 5, characterised in that the receiving chambers (16, 17) and the flow guiding inserts (18, 19) are of cylindrical construction, in that the flow connection paths (12 to 15) open on the surfaces of the receiving chambers (16, 17) and in that the flow guiding inserts (18, 19) each have an axially extending flow duct (20 ) connected to the respective water connection (3 or 4), a transverse aperture (21) proceeding from the flow duct (20) and arranged in the surface and in alignment with the opening of the corresponding flow connection path (12 or 15), and an area formed by the surface and closing the aperture of the other flow connection path (13 or 14).

7. Mixing valve unit according to claim 6, characterised in that the flow connection paths (12 to 15) open with spacing from each other axially with respect to the longitudinal axes of the receiving chambers (16, 17).

8. Mixing valve unit according to claim 7, characterised in that the flow connection paths (12 to 15) open into annular grooves in the receiving chambers (16, 17).

9. Mixing valve unit according to claim 7 or 8, characterised in that the flow guiding inserts (18, 19) are provided with surrounding sealing elements (23).

10. Mixing valve unit according to one of claims 4 to 9, characterised in that a non-return valve (24) is respectively associated with the cold water connection (3) and the hot water connection (4), as is known, and in that the non-return valves (24) are integrated into the flow guiding inserts (18, 19), in particular the axially extending flow ducts (20) of the flow guiding inserts (18, 19).

11. Mixing valve unit according to claim 10, characterised in that the non-return valves (24) are constructed as cylindrical valve inserts and are inserted into the flow ducts (20).

Fig. 1

Fig. 2

Fig. 3